(19) **Europäisches Patentamt / European Patent Office / Office européen des brevets**

(11) **EP 2 379 920 B1**

(12) # FASCICULE DE BREVET EUROPEEN

(45) Date de publication et mention
de la délivrance du brevet:
**15.08.2012 Bulletin 2012/33**

(21) Numéro de dépôt: **09763970.2**

(22) Date de dépôt: **03.12.2009**

(51) Int Cl.:
***F16K 1/22*** *(2006.01)*

(86) Numéro de dépôt international:
**PCT/EP2009/066368**

(87) Numéro de publication internationale:
**WO 2010/069780 (24.06.2010 Gazette 2010/25)**

(54) **VOLET D'OBTURATION D'UNE CANALISATION D'ECOULEMENT DE FLUIDE ET PROCEDE DE FORMATION D'UN TEL VOLET**

KLAPPE ZUM VERSCHLIESSEN EINES KANALS, ENTLANG DEM FLUID STRÖMT UND VERFAHREN ZUR HERSTELLUNG SOLCH EINER KLAPPE

FLAP FOR SHUTTING OFF A DUCT ALONG WHICH FLUID FLOWS AND METHOD OF FORMING SUCH A FLAP

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **18.12.2008 FR 0807133**

(43) Date de publication de la demande:
**26.10.2011 Bulletin 2011/43**

(73) Titulaire: **Valeo Systèmes de Contrôle Moteur 95800 Cergy Saint Christophe (FR)**

(72) Inventeurs:
• **ALBERT, Laurent
F-60640 Verderie (FR)**

• **ADENOT, Sébastien
F-95300 Pontoise (FR)**
• **SORIN, Stéphane
F-78600 Maison Laffite (FR)**
• **NAVE, David
F-75012 Paris (FR)**

(56) Documents cités:
| | |
|---|---|
| EP-A- 1 106 881 | EP-A- 1 323 962 |
| WO-A-2008/131090 | DE-B- 1 022 437 |
| FR-A- 1 459 171 | GB-A- 1 070 830 |
| GB-A- 1 297 623 | JP-A- 8 296 748 |
| US-A- 5 711 510 | US-A- 5 741 006 |

**Description**

L'invention concerne le domaine des volets d'obturation de canalisations de fluide et, plus particulièrement, les volets utilisés dans les véhicules automobiles pour obturer de manière hermétique une canalisation de gaz d'un moteur à combustion interne.

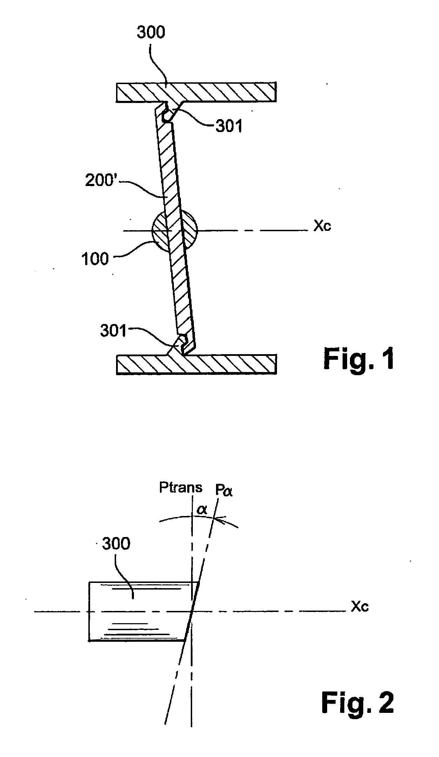

De manière classique et en référence à la figure 1, un volet d'obturation 200' est monté dans une canalisation tubulaire de gaz 300, d'axe $X_c$. Le volet 200' est monté mobile autour d'un axe d'entraînement 100, auquel il est fixé de manière solidaire, entre une position d'ouverture et une position d'obturation, pour contrôler la quantité de gaz circulant dans la canalisation 300. De manière traditionnelle, le volet 200' se présente sous la forme d'un disque circulaire venant obturer la canalisation 300 selon un plan sensiblement transversal à l'axe $X_c$ de la canalisation.

L'homme du métier qui cherche à fabriquer un volet d'obturation de canalisation est confronté à un dilemme. Il doit, d'une part, obtenir un volet dont la surface d'obturation épouse au plus près la surface de passage de la canalisation 300 et, d'autre part, autoriser un jeu suffisant entre le volet 200' et la canalisation 300 pour permettre au volet d'obturation 200' de se déplacer en rotation entre ses positions d'ouverture et d'obturation.

Si le jeu en rotation est trop faible, des frottements apparaissent entre le bord périphérique du volet 200' et la surface interne de la canalisation 300, entraînant, si ce n'est des dysfonctionnements, du moins une usure prématurée du volet 200'. Si le jeu est trop important, il est nécessaire de recourir à des moyens d'étanchéité supplémentaires pour combler le jeu en position d'obturation. La tendance actuelle vise à recourir à de tels moyens d'étanchéité supplémentaires.

Ainsi, en référence à la figure 1, il est connu, par exemple, de ménager dans la canalisation 300 une butée circonférentielle 301, avec laquelle le bord périphérique du volet 200' vient en contact lorsque le volet 200' est en position d'obturation. Le contact peut se faire selon des surfaces transversales et/ou des chicanes, comme on le voit sur la figure 1. L'étanchéité obtenue est satisfaisante, mais une telle butée 301 est complexe à usiner dans la canalisation 300 et ne permet pas d'assurer une étanchéité totale.

Selon une autre solution (non représentée), il est connu de fixer un joint circonférentiel métallique d'étanchéité à la périphérie du volet, afin d'assurer l'étanchéité entre le volet et la canalisation. Néanmoins, au fur et à mesure de son utilisation, le joint métallique à tendance à s'user, entraînant un risque de fuite.

Selon encore une autre solution (non représentée), on connaît des volets de forme elliptique venant en butée sur la paroi d'une canalisation cylindrique, dans une position d'obturation inclinée par rapport à un plan transversal à l'axe de la canalisation. Si l'étanchéité obtenue est satisfaisante, cette solution n'est pas réellement applicable car des problèmes de frottement se posent lors de la rotation du volet elliptique dans la canalisation cylindrique.

Volets de ce type sont déjà connus par les documents EP 1323962, EP 1106881 et US 5741006.

Ainsi, et d'une manière générale, les volets d'obturation connus de l'art antérieur ne sont pas satisfaisants ; l'invention vise à proposer un volet garantissant une bonne étanchéité tout en bénéficiant d'une bonne liberté de mouvement.

A cet effet, l'invention concerne une ensemble d'une canalisation d'écoulement de Fluide, comportant une paroi, et un volet d'obturation de latite canalisation selon la revenditation 1.

La portion d'appui et d'étanchéité formée sur le bord du volet permet de guider la rotation du volet dans la canalisation tout en assurant l'étanchéité, à son niveau, entre le volet et la canalisation. L'étanchéité entre le volet et la canalisation est assurée, en position d'obturation, par la portion d'étanchéité et la portion d'appui et d'étanchéité.

Selon une forme de réalisation, les portions d'appui et d'étanchéité sont complémentaires le long du bord du volet. Autrement dit, le bord est constitué de la ou des portions d'étanchéité et de la ou des portions d'appui et d'étanchéité, ces dernières se succédant le long du bord du volet, de manière adjacente les unes avec les autres. Ainsi, la portion d'étanchéité complète, en position d'obturation, l'étanchéité qui est assurée, entre la position d'ouverture et la position d'obturation, par la portion d'appui et d'étanchéité.

Selon encore une autre forme de réalisation de l'invention, la portion d'étanchéité remplit, en position d'obturation, une fonction d'obturation par butée sur une portion correspondante (de butée) de la canalisation.

De préférence, la portion d'appui et d'étanchéité est agencée pour former une ligne d'étanchéité entre le volet et la canalisation, dont la position sur la canalisation est invariante au cours de la rotation du volet.

De préférence encore, le volet étant destiné à obturer une canalisation de section circulaire, la portion d'appui et d'étanchéité comporte une portion de sphère dont le rayon est égal au rayon de la section de la canalisation.

La portion de sphère permet avantageusement d'épouser la courbure de la paroi de la canalisation, minimisant, du fait de l'égalité des rayons, le jeu et donc les fuites entre le volet et la canalisation, tout en permettant leurs mouvements relatifs.

La portion de sphère permet, de préférence, de guider le volet en rotation en formant mécaniquement une liaison rotule avec la paroi de la canalisation.

La portion de sphère peut se présenter sous la forme d'une calotte sphérique ou d'une tranche annulaire sphérique.

Selon l'invention, la portion d'étanchéité comprend au moins une arête circonférentielle, de butée sur la paroi de la canalisation, se présentant sous la forme d'une portion d'ellipse dont les foyers sont distincts. Ainsi, le volet vient en butée sur la canalisation dans une position d'obturation inclinée par rapport à un plan transversal à l'axe de la canalisation

La courbure elliptique de l'arête de butée vient ainsi avantageusement, en position d'obturation, en butée le long d'une courbe elliptique de la paroi de la canalisation, correspondant à sa section par un plan oblique par rapport à un plan transversal à son axe.

De préférence, le volet comprend au moins deux arêtes circonférentielles de butée, lesdites arêtes étant reliées par la portion de sphère.

De préférence encore, le volet comprenant deux faces opposées s'étendant dans deux plans distincts et parallèles, les arêtes circonférentielles de butée appartiennent chacune à un plan.

De préférence toujours, le volet comprenant un axe d'entraînement en rotation du volet, deux portions de sphère, opposées sur le volet sur l'axe d'entraînement, chaque arrête circonférentielle de butée s'étendant entre les deux portions de sphère.

Les portions de sphère permettent, de préférence, de guider le volet en rotation en formant mécaniquement une liaison pivot avec les parois de la canalisation.

L'invention concerne également un procédé de formation d'une ensemble présenté ci-dessus, dans lequel :

- on forme une ébauche du volet;
- on monte le volet mobile en rotation autour d'un axe de support du volet pour pouvoir changer la position angulaire β du volet sur l'axe;
- on entraîne en rotation une meule autour d'un axe de rotation de la meule, parallèle à l'axe de support du volet et écarté de lui par une distance d'entraxe ;
- on met en contact le bord du volet avec la meule pour le rectifier, sur une zone de rectification du volet ;
- on déplace la zone de rectification le long du bord du volet en modifiant la position angulaire β du volet; et
- on fait varier la distance d'entraxe en fonction de la position angulaire β du volet.

Ce procédé permet de former simplement des volets de forme complexe. Par ailleurs, grâce au procédé, le bord périphérique peut être usiné en une seule passe, ce qui permet d'assurer sa continuité et donc une meilleure obturation. Par « axe », on entend ici aussi bien la pièce mécanique que la direction selon laquelle elle s'étend.

De préférence, on monte le volet par rapport à son axe de support de manière à présenter un angle d'usinage avec un plan transversal à cet axe de support, l'angle d'usinage étant inférieur, en valeur absolue, à la valeur de l'angle d'obturation formé entre le volet et un plan transversal à l'axe de la canalisation dans laquelle le volet est destiné à être monté.

De préférence toujours, les angles d'obturation et d'usinage sont égaux.

Lors de la rectification, le volet est monté sur son axe de support comme si il obturait une canalisation s'étendant selon cet axe, ce qui permet de rectifier le volet dans sa position effective d'utilisation, garantissant la précision de l'usinage.

Selon une caractéristique particulière de l'invention, on stoppe la variation d'entraxe pour au moins un intervalle de positions angulaires β du volet.

De préférence, on stoppe la variation d'entraxe pour deux intervalles de positions angulaires β du volet, les deux intervalles correspondant à deux zones diamétralement opposées sur le volet.

Cela permet avantageusement d'usiner les portions de sphère du volet par friction avec la meule rotative.

Selon une autre caractéristique de l'invention, on indexe la variation d'entraxe en fonction d'une cartographie des dilatations du volet et/ou de la canalisation.

On usine le volet plus que nécessaire dans les zones du volet qui ont le plus tendance à se dilater afin de compenser les dilatations thermiques. Ainsi, le volet dilaté ne force pas sur la surface intérieure du contour de la canalisation pour laquelle il est destiné.

De préférence, la portion d'appui et d'étanchéité du volet comportant une portion de sphère, la meule de rectification comporte une surface concave, de contact avec le bord du volet, de forme circulaire et dont le rayon est égale au rayon de ladite sphère.

La surface concave de la meule, correspondant à et enveloppant la portion de sphère, permet avantageusement d'usiner la portion de sphère en une seule passe et avec précision.

L'invention sera mieux comprise à l'aide du dessin annexé dans lequel :

- la figure 1 représente une vue en coupe d'une canalisation de fluide dans laquelle est monté un volet d'obturation de l'art antérieur, le volet s'appuyant contre une butée circonférentielle formée dans la canalisation;
- la figure 2 représente, de manière schématique, un plan d'obturation oblique $P_\alpha$ d'une canalisation de fluide formant un angle α avec un plan $P_{trans}$ transversal à l'axe $X_c$ la canalisation;
- la figure 3 représente une vue de face, légèrement en perspective, du volet d'obturation selon l'invention ;
- la figure 4 représente une vue en perspective de dessus du volet de la figure 3 ;
- la figure 5 représente une vue en perspective du volet d'obturation dans une canalisation de fluide, en position d'ouverture, les lignes d'étanchéité formées sur les tranches annulaires sphérique du volet étant représentées ;
- la figure 6 représente une vue en perspective du volet d'obturation et de la canalisation de fluide de la figure 5, en position d'obturation, le contour d'obturation de la canalisation étant représenté ;

- la figure 7A représente une vue du dessus de la canalisation, dans l'axe de rotation du volet, le volet étant représenté schématiquement en position d'ouverture ;
- la figure 7B représente une vue du dessus de la canalisation, dans l'axe de rotation du volet, le volet étant représenté schématiquement en position d'obturation ;
- la figure 7C est une vue de face du volet et de la canalisation de la figure 7B en projection orthogonale dans un plan contenant l'axe $Z_v$ de rotation du volet et l'axe $X_c$ de la canalisation ;
- la figure 7D représente une vue du dessus de la canalisation, dans l'axe de rotation du volet, le volet étant représenté schématiquement en position d'obturation ;
- la figure 8 représente schématiquement la portion de sphère du volet qui est inscrite dans les ellipses dont les arêtes de butée du volet ont la forme ;
- la figure 9 représente une vue en perspective du volet d'obturation de l'invention au cours de son usinage par une meule de rectification ;
- la figure 10A représente une vue de dessus du volet et de la meule de la figure 9 avec le volet en position de rectification d'une arête de butée ;
- la figure 10B représente une vue de dessus du volet et de la meule de la figure 9, avec le volet en position de rectification d'une tranche annulaire sphérique et
- la figure 11 est un graphique représentant l'évolution de la distance d'entraxe en fonction de la position angulaire du volet au cours de la rectification du volet.

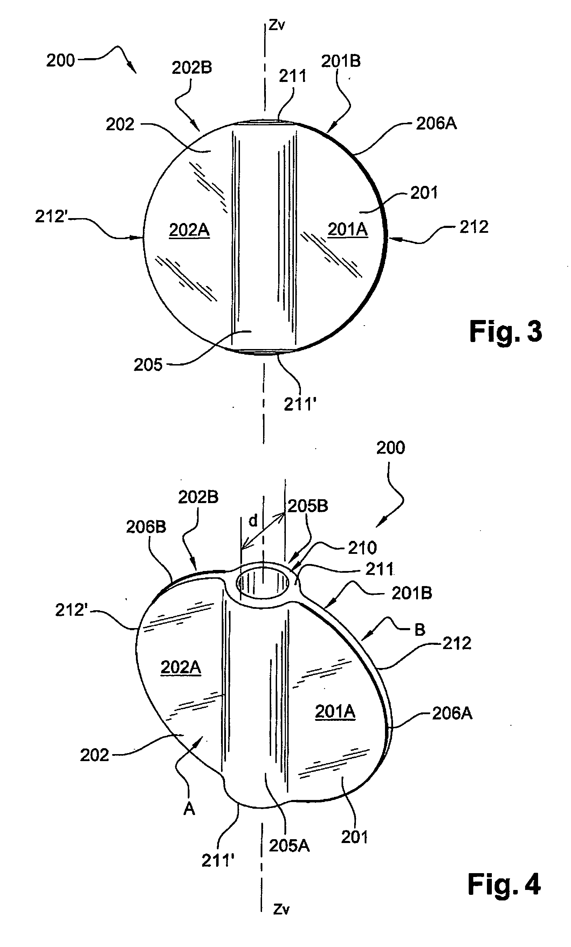

En référence à la figure 3, un volet 200 d'obturation d'une canalisation tubulaire de fluide 300 comporte un corps globalement plat de forme sensiblement elliptique, avec un renflement central 205. Autrement dit, le volet 200 comprend une cheminée tubulaire centrale 205, s'étendant suivant un axe $Z_v$, et deux ailettes latérales 201, 202 symétriques par rapport à l'axe $Z_v$, le volet 200 étant monobloc.

Par convention, on distinguera dans la suite de la description les ailettes 201, 202 par les expressions ailette droite 201 et ailette gauche 202, les positions droite et gauche étant choisies par convention comme les positions droite et gauche sur la figure 4, ce qui ne préjuge pas de l'orientation du volet 200 dans la canalisation 300.

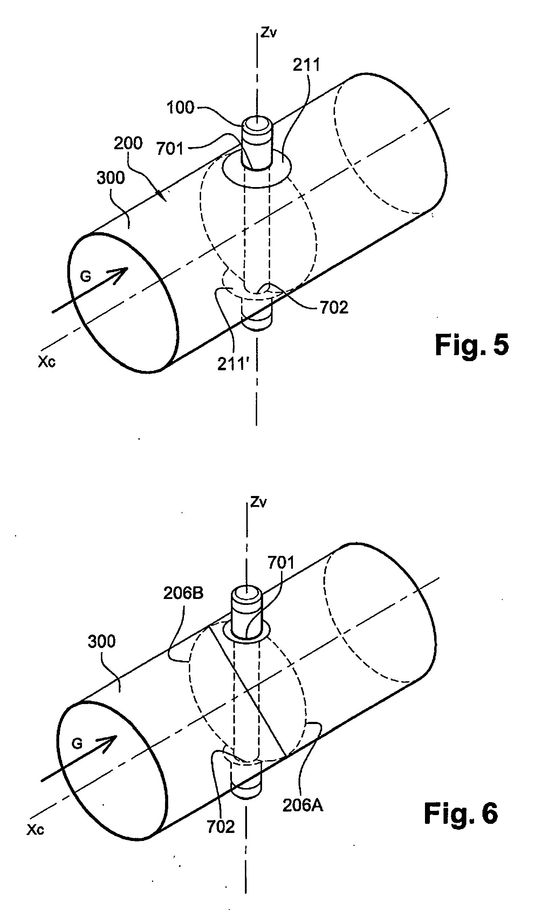

En référence à la figure 5, le volet 200 est monté mobile dans la canalisation 300, rotatif autour de son axe $Z_v$ entre une position d'ouverture et une position d'obturation de l'écoulement de fluide, le volet 200 étant monté solidaire en rotation d'un arbre 100 s'étendant selon l'axe $Z_v$.

Le volet 200 est agencé pour obturer la canalisation 300 selon un plan oblique $P_\alpha$ faisant un angle $\alpha$ avec un plan $P_{trans}$ transversal à l'axe de la canalisation $X_c$, comme représenté sur la figure 2.

Les ailettes latérales du volet 201, 202, formant portions d'étanchéité, sont agencées pour venir en butée avec la surface interne de la canalisation 300 selon le plan d'obturation $P_\alpha$ lorsque le volet 200 est en position d'obturation.

Le volet d'obturation 200 présente deux faces opposées qui sont référencées A et B sur la figure 4 ; on parlera, par simple convention, de face avant A et de face arrière B, en référence aux portions avant et arrière de la figure 4, ces positions ne préjugeant pas de l'orientation du volet 200 dans la canalisation 300. La face avant A regroupe la surface avant 202A de l'ailette gauche 202, la surface extérieure avant 205A de la cheminée tubulaire 205 et la surface avant 201 A de l'ailette droite 201. De même, la face arrière B regroupe la surface arrière 202B de l'ailette gauche 202, la surface extérieure arrière 205B de la cheminée tubulaire 205 et la surface arrière 201B de l'ailette droite 201.

En référence à la figure 4, les faces opposées A et B du volet d'obturation 200 sont reliées par une surface externe 210, circonférentielle au volet 200, agencée pour pouvoir être en contact avec la paroi interne de la canalisation 300. La surface externe 210 est représentée en traits hachurés sur le volet 200 de la figure 4.

La surface externe 210 comprend deux types de surface : un premier type de surface comprend deux bandes 212, 212' (une bande droite 212, une bande gauche 212'), de largeur constante, formant chacune le bord d'une ailette latérale 201, 202, et un deuxième type de surface comportant deux portions de sphère 211, 211' (on parlera, par simple convention, de portion de sphère supérieure 211 et de portion de sphère inférieure 211', en référence aux parties supérieure et inférieure de la figure 4, ces positions ne préjugeant pas de l'orientation du volet 200 dans la canalisation 300), ménagées à chacune des extrémités de la cheminée 205 et agencées pour venir en appui sur la paroi de la canalisation lors de la rotation du volet. Dans cet exemple, chaque portion de sphère est une tranche annulaire sphérique 211, 211'.

Les bandes 212, 212' forment des portions d'étanchéité du bord du volet, en position d'obturation. Les portions de sphère 211, 211' forment des portions d'appui et d'étanchéité du bord du volet 200, en position d'ouverture, d'obturation et entre les deux.

On entend, par tranche annulaire sphérique 211, 211', une surface correspondant à une portion d'une sphère et, plus particulièrement, la portion d'une sphère comprise entre deux plans parallèles coupant chacun ladite sphère. Ainsi, les extrémités de la cheminée 205 du volet 200 ne sont pas planes mais « sphériques », afin de minimiser le jeu entre le volet 200 et la canalisation 300, tout en assurant leurs mouvements relatifs grâce à la complémentarité de leurs surfaces d'appui respectives.

Après avoir présenté globalement le volet 200, ses différentes composantes fonctionnelles vont maintenant être détaillées.

### Cheminée 205 du volet 200

La cheminée tubulaire 205 s'étend selon l'axe $Z_v$ du volet 200 qui est également son axe de rotation dans la canalisation 300, l'axe $Z_v$ de rotation du volet est ici perpendiculaire à l'axe $X_c$ de la canalisation. La cheminée 205 est agencée pour recevoir un arbre d'entraînement 100, de section circulaire, permettant d'entraîner le volet 200 en rotation dans la canalisation 300. La cheminée 205 est ici de section circulaire mais il va de soi qu'elle peut se présenter sous des formes diverses telle que, par exemple, un cheminée de section carrée, rectangulaire ou comprenant un méplat pour correspondre, par complémentarité de formes, avec un arbre 100.

Dans le cas de la présente espèce avec une section circulaire, la cheminée 205 est rendue solidaire en rotation de son arbre d'entraînement par tout moyen approprié tel qu'un ergot de l'arbre reçu dans une encoche de la cheminée 205.

Comme décrit précédemment, les extrémités de la cheminée 205 se présentent chacune sous la forme d'une tranche annulaire sphérique 211, 211' formant surface d'appui sur la surface interne de la paroi de la canalisation et permettant, lors de la rotation du volet 200 dans la canalisation 300, d'assurer l'étanchéité aux extrémités de la cheminée 205.

Dans cet exemple de réalisation, le volet 200 comporte deux tranches sphériques 211, 211', chacune formée à une extrémité de la cheminée 205 ; chaque portion de sphère se présente sous la forme d'une tranche annulaire pour recevoir l'arbre d'entraînement. Selon une autre forme de réalisation, l'une des portions de sphère peut se présenter sous la forme d'une calotte sphérique, l'arbre d'entraînement du volet 200 ne débouchant que par un seul de ses cotés, le volet 200 étant guidé en rotation de l'autre côté par la calotte sphérique en appui sur la surface interne de la paroi de la canalisation.

Les tranches annulaires sphériques 211, 211', schématisées chacune sur la figure 5 par une calotte sphérique, possèdent un rayon de courbure sensiblement égal au rayon de la section de la canalisation 300 dans la zone de laquelle est monté le volet 200. Ainsi, chaque tranche annulaire sphérique 211, 211' forme une surface d'appui et d'étanchéité sur la canalisation 300, l'appui se faisant le long d'une ligne d'étanchéité 701, 702, respectivement entre ces éléments.

La ligne d'étanchéité 701, 702 est une portion de cercle, correspondant au cercle dont la section de la canalisation 300 a la forme, s'étendant dans un plan transversal $P_{trans}$ à l'axe $X_c$ de la canalisation 300 ; dans la mesure où il s'agit de tranches annulaires sphériques 211, 211', chaque ligne d'étanchéité 701, 702 se décompose en fait en deux portions d'un même cercle, situées de part et d'autre de la tranche annulaire sphérique considérée 211, 211', entre lesquelles s'étend l'arbre 100 d'entraînement du volet 200. On parlera par la suite de lignes d'étanchéité 701, 702.

Lorsqu'un flux de gaz circule dans la canalisation 300 (voir flèche G), il ne peut s'immiscer entre les tranches annulaires sphériques 211, 211' et la canalisation 300 à cause des lignes d'étanchéité 701, 702 qui s'étendent dans le plan $P_{trans}$ transversal à l'axe $X_c$.

Comme la portion d'appui 211, 211' est sphérique, sa surface de contact avec la surface interne de la paroi de la canalisation 300 est invariante sur la canalisation, quelle que soit la position angulaire du volet 200 dans la canalisation 300. Il se forme donc des lignes d'étanchéité 701, 702 pour toutes les positions du volet 200, garantissant ainsi une étanchéité aussi bien lorsque le volet 200 est ouvert (partiellement ou totalement) que lorsqu'il est fermé; du point de vue de la canalisation, ces lignes d'étanchéité sont invariantes ; la valeur même de la longueur (curviligne) des lignes d'étanchéité est invariante, puisque l'axe $Z_v$ de rotation du volet 200 est aussi un axe de symétrie pour les portions annulaires sphériques 211, 211'.

Outre les avantages que procure les tranches annulaires sphériques 211, 211' en ce qui concerne l'étanchéité, les tranche 211, 211' permettent de guider le mouvement de rotation du volet 200 dans la canalisation 300 en formant une liaison pivot entre la canalisation 300 et le volet 200.

Une liaison pivot est formée car le volet 200 est bloqué en translation dans la direction de son axe d'entraînement $Z_v$ et libre en rotation autour de cet axe $Z_v$, le blocage en translation et la liberté en rotation étant respectivement imposé et autorisée par l'appui des tranches annulaires sphériques 211, 211' sur la surface interne de la paroi de la canalisation 300. Le volet est dit auto-centrant.

### Ailettes du volet

En référence à la figure 4, les ailettes 201, 202 du volet d'obturation 200 comprennent chacune une arête de butée 206A, 206B qui est formée à l'intersection entre la face d'ailette 201A, 202B et la bande externe de contact 212, 212' correspondantes. Plus précisément, la face avant 201A de l'ailette droite 201 et la bande externe droite 212 sont adjacentes au niveau de l'arête droite d'obturation 206A, tandis que la face arrière 202B de l'ailette gauche 202 et la bande externe gauche 212' sont adjacentes par l'arête gauche d'obturation 206B. Afin de faciliter leur identification, les arêtes de butée 206A, 206B du bord périphérique du volet sont dessinées en traits forts sur la figure 4.

Les arêtes de butée 206A, 206B sont les arêtes des ailettes 201, 202 qui entrent en butée sur la surface interne de la canalisation 300, en position d'obturation, pour assurer l'étanchéité latérale du volet 200. De leur forme dépend la qualité de l'obturation. En référence à la figure 4, les arêtes de butée 206A, 206B appartiennent respectivement à des faces opposées A, B du volet 200.

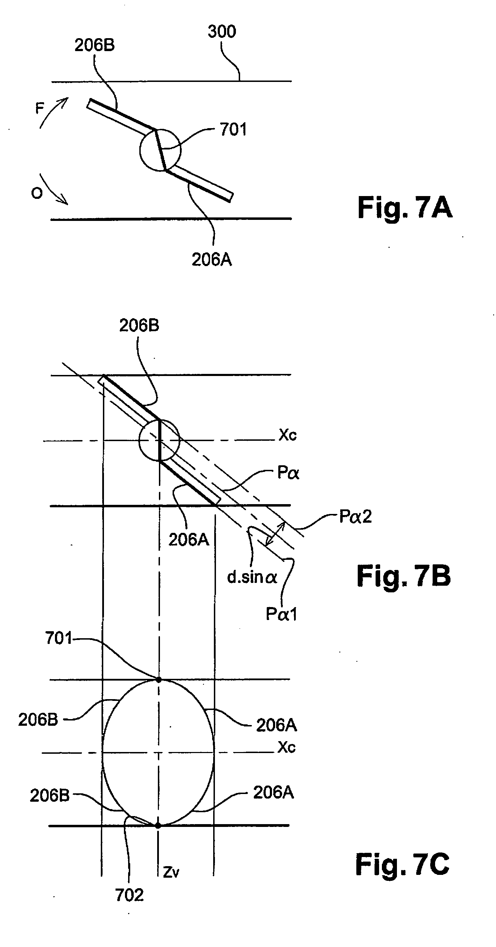

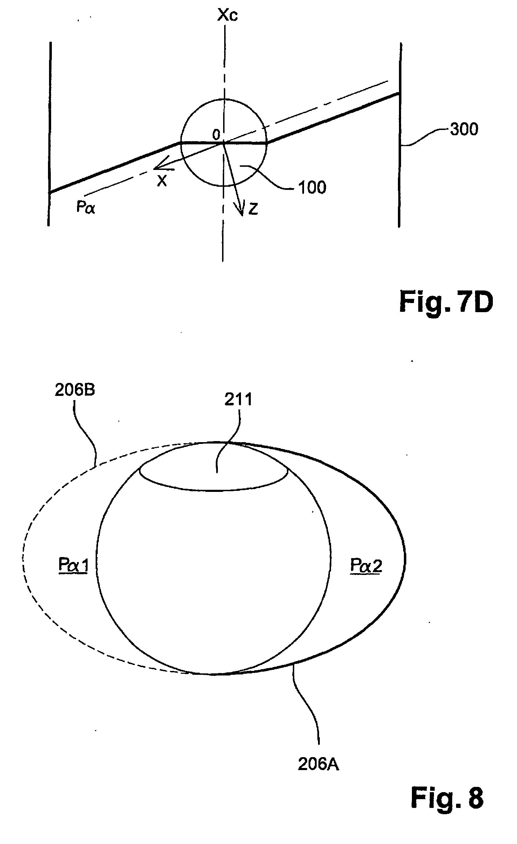

En référence à la figure 7B, chaque arête de butée 206A, 206B a la forme d'une portion d'ellipse. Les arêtes 206A, 206B s'étendent dans des plans $P_{\alpha 1}$, $P_{\alpha 2}$ parallèles l'un à l'autre (les plans des faces avant droite 201A et arrière gauche 202B auxquelles les arêtes 206A, 206B appartiennent respectivement). En position d'obturation, les arêtes 206A, 206B s'étendent donc chacune dans un plan parallèle à un plan $P_\alpha$ que l'on nommera plan d'obturation $P_\alpha$, qui est la plan moyen, dans lequel s'étend le volet en position d'obturation (il s'agit du plan $P_\alpha$ passant par l'axe de rotation Zv du volet 200 et parallèle à ses faces avant A et arrière B).

Le plan d'obturation $P_\alpha$ est incliné d'un angle $\alpha$ par rapport à un plan $P_{trans}$ transversal à l'axe Xc de la canalisation 300 ; il coupe donc la canalisation cylindrique selon une courbe ayant la forme d'une ellipse. C'est de cette ellipse que les arêtes de butée 206A, 206B ont la forme. Comme les arêtes de butée 206A, 206B s'étendent dans des plans $P_{\alpha 1}$, $P_{\alpha 2}$ parallèles au plan d'obturation $P_\alpha$, lesquels plans coupent la canalisation avec le même angle que le plan d'obturation $P_\alpha$, chaque arête de butée 206A, 206B épouse parfaitement la forme de la surface interne de la canalisation, suivant la portion de l'ellipse correspondant à la section de la canalisation par le plan, parallèle au plan $P_\alpha$, contenant l'arête 206A, 206B considérée.

En position d'obturation du volet 200, les courbes le long desquelles s'étendent les arêtes de butée 206A, 206B sont reliées au niveau de la surface interne de la canalisation 300, par les lignes d'étanchéité 701, 702 ménagées par les tranches annulaires sphériques 211, 211' (on rappelle incidemment que chaque ligne d'étanchéité 701, 702 est en fait composée de deux portions d'un même cercle, séparées par l'axe 100 d'entraînement du volet 200).

L'ellipse, dont les arêtes de butée 206A, 206B ont la forme, est agencée pour que le cercle, dont les lignes d'étanchéité 701, 702 ont la forme (c'est-à-dire le cercle dont la section de la canalisation 300 a la forme dans cette zone), soit inscrit dans l'ellipse. Comme le cercle des lignes d'étanchéité 701, 702 est inscrit dans l'ellipse des arêtes de butée 206A, 206B, les lignes d'étanchéité 701, 702 assurent une bonne continuité entre les arêtes de butée 206A, 206B en position d'obturation. En vue de face du volet 200 et de la canalisation 300 en projection sur un plan axial de la canalisation 300 contenant l'axe de rotation $Z_v$ du volet 200 (Figure 7C), on voit une continuité entre les arêtes de butée 206A, 206B, ces arêtes étant en fait reliées, perpendiculairement au plan de projection de la figure 7C, par les lignes d'étanchéité 701, 702.

L'ellipse dont les arêtes de butée 206A, 206B ont la forme comporte deux foyers distincts. Cela revient à dire que l'angle $\alpha$ entre le plan moyen du volet 200 et un plan $P_{trans}$ transversal à la canalisation 300 n'est pas nul (car alors la section de la canalisation 300 par le plan moyen du volet $P_\alpha$ aurait la forme d'un cercle (ce qui n'est pas souhaité), un cercle étant une ellipse dont les deux foyers sont confondus). Autrement dit encore, l'ellipse, dont les arêtes de butée 206A, 206B ont la forme, n'est pas un cercle.

L'équation générale d'une ellipse dans un plan, comprenant un repère orthogonal (xy), est définie ci-dessous.

● Equation cartésienne :

$$\frac{x^2}{a^2}+\frac{y^2}{b^2}\approx 1$$

● Equation paramétrique:

$$x = a.\cos t \ (t \in \mathfrak{R})$$

$$y = b.\sin t$$

Les déplacements des diverses courbes décrites (les lignes d'étanchéité 701, 702, arêtes de butée 206A, 206B) au cours du fonctionnement du volet 200 vont maintenant être détaillées, pour illustrer la description ci-dessus.

En position d'ouverture du volet 200 et en référence à la figure 7A, les arêtes de butée 206A, 206B sont décalées par rapport aux lignes d'étanchéité 701, 702 formées par les portions de sphère 211, 211' sur la surface interne de la canalisation 300 ; autrement dit, il n'y a pas de continuité, en vue de dessus dans l'axe Zv du volet 200, entre les arêtes de butée 206A, 206B du volet 200 et les lignes d'étanchéité 701, 702 de la surface interne de la canalisation 300. Dans cette position, les arêtes de butée 206A, 206B ne sont pas en contact avec la surface interne de la canalisation 300, seules les portions de sphère 211, 211' étant en contact (en appui) sur cette surface.

Au fur et à mesure que le volet 200 se ferme, les arêtes de butée 206A, 206B se rapprochent des lignes d'étanchéité 701, 702. En position d'obturation et en référence à la figure 7B, les arêtes de butée 206A, 206B viennent compléter les lignes d'étanchéité 701, 702 pour former un contour continu d'étanchéité du volet 200 dans la canalisation 300. Ainsi, et conformément à l'invention, les portions de sphère 211, 211' forment des portions d'appui et d'étanchéité du volet 200 sur la canalisation 300 dans toutes les positions du volet 200 (ouverture, obturation, entre les deux), tandis que les arêtes de butée 206A, 206B ne sont en contact avec la surface interne de la canalisation 300 qu'en position d'obturation, formant des portions d'étanchéité en position d'obturation.

De nouveau, et en référence aux figures 7A et 7B, le volet 200 est ici entraîné en rotation dans le sens horaire pour obturer la canalisation (flèche F) et dans le sens anti-horaire pour l'ouvrir (flèche O). En position d'obturation, les arêtes de butée 206A, 206B du volet 200 sont en butée dans la canalisation 300, le volet 200 étant alors oblique dans la canalisation 300 selon le plan $P_\alpha$. En référence à la figure 6, la canalisation 300 est alors obturée par le volet 200 selon un contour d'étanchéité continu formé par les arêtes de butée 206A, 206B et les lignes d'étanchéité 701, 702, qui sont complémentaires le long du contour d'étanchéité (on rappelle ici incidemment que le contour continu est en fait interrompu par l'arbre 100 d'entraînement du volet 200 ; il y a néanmoins continuité de l'étanchéité en dehors de cet arbre 100 et, en tout état de cause, continuité des formes des courbes des lignes d'étanchéité, la ligne d'étanchéité 701, 702 de chaque tranche annulaire sphérique comportant deux portions distinctes mais appartenant à un même cercle, comme expliqué plus haut.

En référence à la figure 8 représentant le contour d'étanchéité du volet de manière simplifiée, les arêtes de butée 206A, 206B sont définies par une ellipse et les tranches sphériques 211, 211' par une sphère, c'est-à-dire dans un plan, par un cercle. Afin d'assurer la continuité du contour d'étanchéité entre les arêtes de butée 2060A, 206B et les tranches sphériques 211, 211', le cercle définissant les tranches sphériques 211, 211' est inscrit dans l'ellipse des arêtes de butée 206A, 206B.

De manière plus complète, on rappelle que les arêtes de butée 206A, 206B appartiennent à deux plans $P_{\alpha1}$, $P_{\alpha2}$ distincts et parallèles, s'étendant de part et d'autre du plan moyen du volet $P_\alpha$. Dans chacun desdits plans, les tranches annulaires sphériques 211, 211' sont définies par une portion de courbe appartenant à un cercle qui est inscrit dans l'ellipse définissant l'arête de butée 206A, 206B appartenant audit plan.

Du fait du diamètre externe d du cylindre dont la cheminée 205 du volet 200 à la forme (Figure 4), il est nécessaire, pour obtenir une étanchéité optimale entre le volet 200 et la canalisation 300, de décaler les ailettes 201, 202 l'une par rapport à l'autre d'une distance $d.\sin\alpha$, correspondant à la distance entre les deux plans $P_{\alpha1}$, $P_{\alpha2}$ (voir Figure 7B).

Pour que les arêtes de butée 206A, 206B entrent correctement en butée sur la surface interne de la canalisation 300 en position d'obturation du volet 200, il ne faut pas que le reste de l'épaisseur de la paroi formant les ailettes 201, 202 gêne le mouvement. C'est pourquoi les plan $P_{\alpha1}$, $P_{\alpha2}$ contenant les arêtes de butée sont les plans des ailettes 201, 202 les plus éloignés les uns des autres, autrement dit, les plans tournés vers « l'extérieur » des ailettes (voir Figure 7B), autrement dit encore, les ailettes 201, 202 sont formées de telle sorte que la matière de leurs parois soit comprise entre ces plans $P_{\alpha1}$, $P_{\alpha2}$. Plus précisément, la matière de chaque ailette 201, 202 est de préférence comprise entre le plan $P_{\alpha1}$, $P_{\alpha2}$ contenant son arête de butée 206A, 206B et le plan moyen $P_\alpha$ du volet 200 (qui est, pour mémoire, le plan passant par l'axe de rotation $Z_v$ du volet 200 et parallèle aux plans $P_{\alpha1}$, $P_{\alpha2}$ contenant les arêtes de butée 206A, 206B). Les ailettes 201, 202 sont par ailleurs usinées le long de leur bande périphérique 212, 212' pour que la matière ne s'étende pas au-delà des arêtes de butée 206A, 206B en vue de face du volet 200 (plus précisément la matière est même, sur tout le contour des ailettes 201, 202, en-deçà des arêtes de butée 206A, 206B).

### Exemple de déplacement du volet d'obturation dans la canalisation de gaz

La mise en oeuvre de l'obturation de la canalisation 300 par le volet 200 va maintenant être détaillée.

En référence à la figure 6, un flux de gaz d'admission (G) se déplace de l'amont vers l'aval dans une canalisation 300 qui débouche sur les cylindres d'un moteur thermique à combustion interne.

Dans cet exemple, on considère le volet 200 initialement en position d'ouverture dans la canalisation 300, les ailettes 201, 202 du volet étant orientées sensiblement parallèlement à l'axe de la canalisation $X_c$. La canalisation 300 est traversée transversalement par l'arbre 100 d'entraînement du volet 200, l'arbre 100 étant monté entre deux ouvertures formées dans la canalisation 300 comme représenté sur la figure 6.

L'arbre d'entraînement 100 traverse successivement l'ouverture supérieure de la canalisation 300 puis la cheminée tubulaire 205 du volet 200 pour ressortir par l'ouverture inférieure de la canalisation 300. Le volet 200 est solidaire en rotation de l'arbre 100 ce qui permet de l'entraîner en rotation en faisant tourner l'arbre d'entraînement 100 autour de l'axe $Z_v$.

En référence à la figure 7A, lorsque le volet 200 tourne dans le sens horaire autour de l'axe $Z_v$, les arêtes d'obturation 206A, 206B appartenant respectivement aux ailettes 201, 202 se rapprochent de la paroi interne de la canalisation 300 jusqu'à ce que le volet 200 forme sensiblement un angle $\alpha$ avec un plan transversal $P_{trans}$ de la canalisation tubulaire 300, les arêtes 206A, 206B entrant alors en butée sur la surface interne de la canalisation 300.

Au cours de la rotation, la tranche annulaire sphérique 211 guide le mouvement du volet 200 tout en assurant l'étanchéité aux extrémités de la cheminée 205, quelle que soit la position du volet 200, le long des lignes d'étanchéité 701, 702.

En position d'obturation, le volet 200 est en contact avec la surface interne de la paroi de la canalisation 300 selon le contour d'étanchéité précédemment décrit.

L'étanchéité entre les ailettes 201, 202 et la canalisation 300 est assurée par les arêtes de butée 206A, 206B dont la courbure elliptique épouse la paroi de la canalisation 300, les arêtes venant compléter les lignes d'étanchéité 701, 702 pour former le contour d'étanchéité.

Ainsi, la canalisation 300 est obturée de manière étanche, sans ajout de joints d'étanchéité ou de butées supplémentaires.

En référence à la figure 6, en position d'obturation, le flux de gaz (G) est bloqué contre la face (A) du volet 200, les cylindres du moteur n'étant alors plus alimentés. Il suffit d'entraîner l'arbre d'entraînement 100 dans le sens opposé afin d'ouvrir de nouveau la canalisation 300 et de laisser passer les gaz d'admission. Le degré d'ouverture du volet 200 permettant avantageusement de doser le flux de gaz d'admission.

Procédé de formation du volet d'obturation

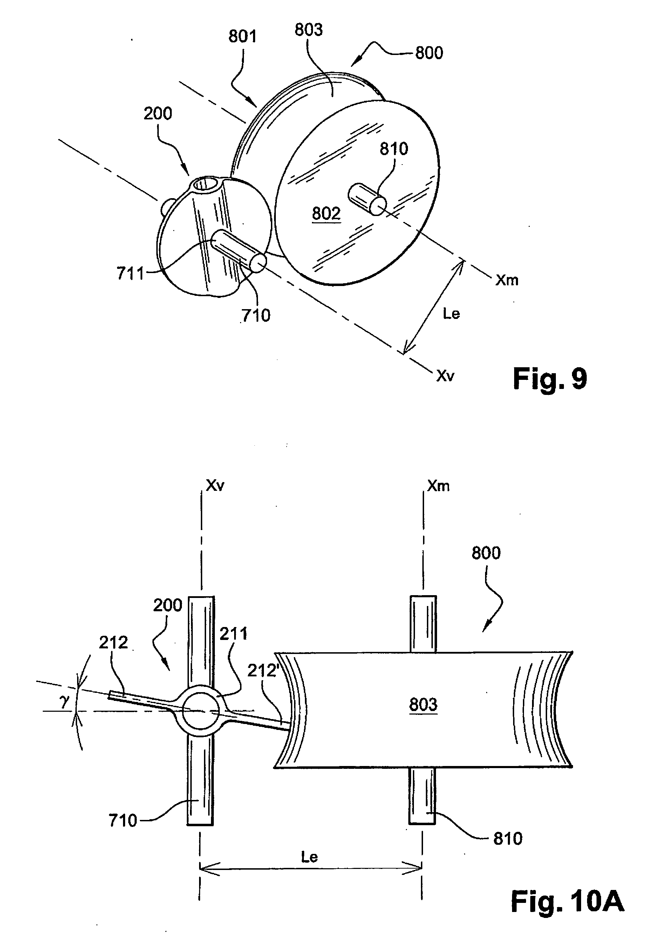

Le procédé de formation du volet 200 comprend une première étape de moulage de fonderie, permettant de façonner une ébauche du volet 200 lui donnant sa forme générale, mais de manière approximative, avec une légère surépaisseur. Le volet 200 subit ensuite une étape de rectification dans laquelle on rectifie le volet 200 par usinage afin de lui donner, de manière précise, sa forme définitive décrite précédemment. En particulier, l'étape de rectification consiste à former précisément les arêtes de butée 206A, 206B du volet 200 ainsi que les portions de sphère 211, 211'. Dans la forme de réalisation présentée, on usine le volet 200 par friction avec une meule rotative 800, comme représenté sur la figure 9.

Le volet 200 est rectifié afin d'avoir une forme épousant parfaitement la forme de la surface interne de la canalisation 300 en position d'obturation.

A cet effet, lors de l'étape de rectification, le volet 200 est monté sur un arbre 710 rotatif de support du volet 200 s'étendant selon un axe de support $X_v$.

Pour maintenir le volet solidaire de l'arbre 710, une ouverture traversante 711 est usinée dans la cheminée 205, centralement au volet 200, à égale distance des deux extrémités de la cheminée 205. L'arbre de support 710, traversant l'ouverture 711, et le volet 200 sont ensuite maintenus solidaires en rotation autour de l'axe $X_v$ de l'arbre de support 710. Cette ouverture traversante 711 du volet 200 est également utilisée pour le montage du volet dans la canalisation 300. En effet, lorsque le volet 200 est positionné dans la canalisation 300 et traversé par l'arbre d'entraînement 100, on peut insérer une goupille, ou un autre moyen de fixation, dans un orifice ménagé dans l'arbre 100 via l'ouverture traversante 711 du volet 200 pour fixer de manière solidaire le volet 200 à l'arbre 100.

Il va de soi que l'arbre et le volet pourraient également être reliés par soudure par transparence, par liaison avec un plot saillant formé sur le volet ou tout autre moyen de liaison connu de l'homme du métier.

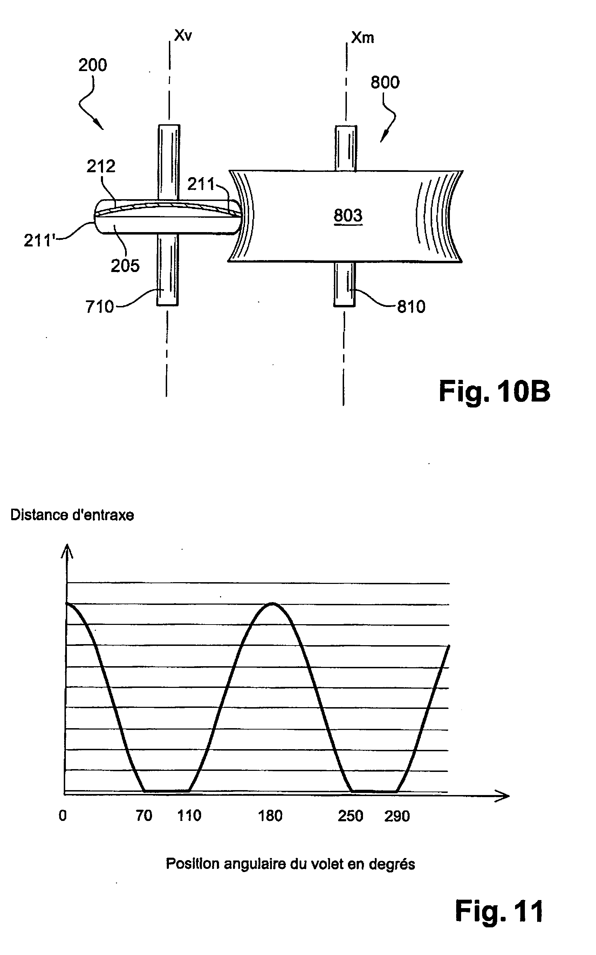

Dans cet exemple, en référence à la figure 10, l'axe $X_v$ de l'arbre de support 710 fait un angle γ avec le plan moyen du volet (c'est-à-dire avec les faces des ailettes 201, 202 du volet 200), dénommé par la suite « angle d'usinage γ ». La valeur de l'angle d'usinage γ est inférieure en valeur absolue à la valeur de l'angle d'obturation α que ferait le volet 200 dans une canalisation 300 qui s'étendrait selon la direction $X_v$.

La meule de rectification 800 est montée rotative sur un arbre d'entraînement 810, s'étendant selon un axe $X_m$, que l'on nommera axe de rotation $X_m$ de la meule 800, parallèle à l'axe de support $X_v$, comme représenté sur la figure 9. La meule 800 se présente sous la forme d'un cylindre d'axe $X_m$ dont la génératrice est une courbe, la meule 800 ayant sensiblement une forme de jante avec une face supérieure 801 et une face inférieure 802 reliées par une surface latérale concave 803 générée par la génératrice.

La génératrice de la meule 800 est, en l'espèce, une portion de cercle dont le rayon est égal au rayon de la canalisation 300 dans laquelle le volet 200 est destiné à être monté. La meule 800 est adaptée, de part sa surface latérale 803, à la portion de sphère 211 du volet 200 qu'elle doit usiner, ce qui permet d'obtenir une rectification très précise, garantissant une obturation optimale du volet 200 dans la canalisation 300. Dans cet exemple, la surface latérale 803 de la meule 800 enveloppe les tranches annulaires sphériques 211, 211' pour les usiner avec précision selon une surface de rectification correspondant exactement à la forme des tranches annulaires sphériques 211, 211'.

Par la suite, on désigne par distance d'entraxe Le la distance entre l'axe $X_m$ de rotation de la meule 800 et l'axe $X_v$ de support du volet 200.

Au cours de l'étape de rectification, l'arbre 810 d'entraînement de la meule 800 est entraîné en rotation et déplacé en translation pour que la meule 800 entre en contact par friction avec le bord du volet 200 pour l'usiner, selon une zone de contact désignée par la suite zone de rectification.

Pour rectifier le volet 200 sur tout son bord périphérique, on modifie la position angulaire β du volet 200 autour de son axe de support $X_v$ en entraînant en rotation l'arbre de support 710, déplaçant ainsi la zone de rectification le long du bord du volet 200.

La position angulaire β du volet 200 définit la position de la zone de rectification sur le volet 200. Ainsi, pour β égal à 0°, la meule 800 est en contact avec le milieu de l'arête de butée 206A du volet (Figures 9 et 10) tandis que pour β sensiblement égal à 90 ou 270°, la meule 800 est en contact avec une des tranches annulaires sphériques 211, 211' du volet 200.

Dans une forme de réalisation préférée, la valeur de l'angle d'usinage γ est égale à la valeur de l'angle d'obturation α que ferait le volet 200 dans une canalisation 300 qui s'étendrait selon la direction $X_v$. Cela permet avantageusement de répartir les zones de friction sur la surface latérale 803 de la meule 800 et ainsi de répartir les usures.

Dans cet exemple, lors de l'étape de rectification, l'axe de support $X_v$ de l'arbre 710 rotatif de support du volet 200 simule pour le volet 200, l'axe $X_c$ de la canalisation 300 dans laquelle le volet 200 est destiné à être monté. Le volet 200 est monté sur l'arbre de support 710 comme il serait positionné par rapport à l'axe d'une canalisation (de même axe) en position d'obturation.

Comme les angles d'usinage et d'obturation sont égaux, l'ouverture traversante 711 du volet 200 s'étend axialement dans la canalisation 200 lors du montage du volet 200 ce qui facilite l'insertion, par exemple, d'une goupille dans l'arbre d'entraînement 100 pour la fixation du volet 200.

L'étape de rectification va maintenant être présentée plus en détails.

Commande de l'entraxe

Afin de diminuer le nombre d'étapes de rectification, connues également sous le nom de « passes », la meule 800 est commandée en translation pour faire varier la distance d'entraxe ($L_e$).

En référence à la figure 11, la distance d'entraxe (Le) est commandée en fonction de la position angulaire β du volet 200. La variation de la distance d'entraxe (Le) est représentée en ordonnée sur le graphique de la figure 11, en fonction de la position angulaire β du volet 200 en abscisses.

Plus la distance d'entraxe (Le) est importante, plus le volet 200 est distant de la meule 800 et plus le rayon local du volet 200 est important. On entend par rayon local la distance entre le centre du volet 200 et la zone de rectification. Inversement, plus la distance (Le) est faible, plus le volet 200 est proche de la meule 800 et plus le rayon local du volet 200 est faible.

Toujours en référence à la figure 11, la distance d'entraxe est minimale et constante pour β compris entre 70° et 110°. Cela signifie que la distance entre la meule 800 et le centre du volet 200 est constante et donc, que le rayon local du volet 200 demeure constant entre ces deux positions. Cette fourchette angulaire, ou intervalle de positions angulaires β, correspond à la rectification d'une tranche annulaire sphérique 211 dont le rayon de courbure est constant et égal au rayon de la canalisation 300 dans laquelle le volet 200 est destiné à être monté. Le volet 200 est représenté dans une telle position de rectification sur la figure 10B. De par la forme de jante de la meule 800, et plus particulièrement de par la forme circulaire concave de sa surface latérale 803, la tranche sphérique 211 est rectifiée de manière précise et rapide en une seule passe, la tranche 211 étant rectifiée dans la concavité de la meule, ce qui lui procure sa forme sphérique. En référence à la figure 11, une position angulaire β du volet 200 comprise entre 250° et 290° correspond à la deuxième tranche annulaire sphérique 211' du volet 200, opposée à la première sur la cheminée 205.

Autrement dit, tout en faisant tourner la meule 800, on stoppe la variation de la distance d'entraxe Le afin d'usiner les tranches sphériques 211 qui sont diamétralement opposées sur le volet 200.

En référence à la figure 11, entre les tranches annulaires sphériques 211 du volet 200, la valeur de l'entraxe (Le) est commandée en fonction de la position angulaire du volet selon une fonction représentée par une courbe se présentant, par exemple, sous la forme d'une pseudo-sinusoïde. Le déplacement pseudo-sinusoïdal de la meule 800 par rapport au volet 200 permet de rectifier de manière elliptique les arêtes de butée 206A, 206B du volet 200.

Un tel procédé de rectification permet de rectifier le volet 200 de manière continue contrairement à un procédé en plusieurs passes dans lequel, par exemple, la rectification des tranches annulaires sphériques 211, 211' serait dissociée de la rectification des arêtes elliptiques 206A, 206B.

La rectification continue permet d'assurer, en outre, une continuité du contour d'étanchéité du volet 200.

Le déplacement pseudo-sinusoïdal de la meule 800 par rapport au volet 200 peut également être modifié/paramétré pour tenir compte d'une cartographie des dilatations thermiques sur le volet 200, cette cartographie recensant, par exemple, les zones du volet qui ont tendance à se dilater le plus. Le déplacement pseudo-sinusoïdal de la meule 800 est paramétré de manière à usiner plus que nécessaire les zones qui ont tendance à se dilater le plus afin de compenser la dilatation du volet 200 dans cette zone. Autrement dit, on diminue le rayon local du volet par rapport à l'équation théorique de son contour d'étanchéité pour éviter que le volet 200 ne se dilate en forçant sur la paroi interne de la canalisation 300.

La cartographie des dilatations peut également comporter des indications relatives aux dilatations de la canalisation. Ainsi, la forme des arêtes du volet 200 n'est pas parfaitement elliptique mais adaptée pour tenir compte des dilatations du volet et/ou de la canalisation.

Il a été ici décrit un volet de forme elliptique pour obturer une canalisation de section circulaire. Il va de soi que l'invention s'applique à tout volet dont le bord périphérique comporte:

- au moins une portion d'étanchéité au fluide entre le bord du volet et la paroi de la canalisation en position d'obturation et

- au moins une portion d'appui et d'étanchéité sur la paroi de la canalisation en position d'ouverture, en position d'obturation et lors de la rotation du volet entre ces positions.

Ainsi, l'invention s'applique également à un volet de forme circulaire, rectangulaire ou autre.

La portion d'étanchéité au fluide du bord du volet peut comporter une portion destinée à venir en butée sur une surface correspondante de la canalisation, comme décrit précédemment, mais elle peut également comporter un joint d'étanchéité monté circonférentiellement au volet ou une butée circonférentielle destinée à venir en butée sur une surface transversale de la canalisation (formée par une butée en saillie sur la surface interne de la canalisation). Dans tous les cas, le volet comporte par ailleurs une portion d'appui et d'étanchéité en contact permanent avec la surface de la canalisation.

**Revendications**

1. Ensemble d'une canalisation (300) d'écoulement de fluide, comportant une paroi, et d'un volet (200) d'obturation de ladite canalisation (300), le volet (200) comportant un bord périphérique et étant agencé pour être monté, dans la canalisation (300), rotatif autour d'un axe (Zv) entre une position d'ouverture et une position d'obturation de l'écoulement de fluide, le volet (200) venant en butée sur la canalisation dans une position d'obturation inclinée par rapport à un plan transversal à un axe de la canalisation, le bord du volet (200) comportant:

   - au moins une portion (206A, 2006B), dite d'étanchéité, permettant d'établir une étanchéité au fluide entre le bord du volet (200) et la paroi de la canalisation (300) en position d'obturation, ladite portion d'étanchéité (206A, 2006B) comprenant au moins une arête circonférentielle (206A, 2006B), de butée sur la paroi de la canalisation (300), et
   - au moins une portion (211, 211') d'appui et d'étanchéité sur la paroi de la canalisation (300) en position d'ouverture, en position d'obturation et lors de la rotation du volet (200) entre ces positions.

2. Ensemble selon la revendication 1, dans lequel les portions (211, 211', 206A, 2006B) d'appui et d'étanchéité sont complémentaires le long du bord du volet (200).

3. Ensemble selon l'une des revendications 1 à 2, dans lequel la portion d'étanchéité (206A, 2006B) remplit, en position d'obturation, une fonction d'obturation par butée sur une portion correspondante de la canalisation (300).

4. Ensemble selon l'une des revendications 1 à 3, dans lequel la portion d'appui et d'étanchéité (206A, 2006B) est agencée pour former une ligne d'étanchéité (701, 702) entre le volet (200) et la canalisation (300), dont la position sur la canalisation (300) est invariante au cours de la rotation du volet (200).

5. Ensemble selon l'une des revendications 1 à 4, destiné à obturer une canalisation (300) de section circulaire, dans lequel la portion d'appui et d'étanchéité (211, 211') comporte une portion de sphère (211, 211') dont le rayon est égal au rayon de la section de la canalisation (300).

6. Ensemble selon la revendication 5, dans lequel la portion de sphère (211, 211') se présente sous la forme d'une calotte sphérique ou d'une tranche annulaire sphérique (211, 211').

7. Ensemble selon l'une des revendications 5 et 6, dans lequel la portion de sphère (211, 211') est agencée pour guider le volet (200) en rotation en formant mécaniquement une liaison pivot avec la paroi de la canalisation (300).

8. Ensemble selon l'une des revendications 5 à 7, dans lequel la ou lesdites arêtes circonférentielles (206A, 2006B), de butée sur la paroi de la canalisation (300), se présentent sous la forme d'une portion d'ellipse dont les foyers sont distincts.

9. Ensemble selon la revendication 8, comprenant deux arêtes circonférentielles de butée (206A, 2006B), lesdites arêtes (206A, 2006B) étant reliées par la portion de sphère (211, 211').

10. Ensemble selon la revendication 9, comprenant deux faces opposées (A, B) s'étendant dans deux plans distincts et parallèles ($P_{\alpha 1}$, $P_{\alpha 2}$) dans lequel les arêtes circonférentielles de butée (206A, 2006B) appartiennent chacune à un plan ($P_{\alpha 1}$, $P_{\alpha 2}$).

11. Ensemble selon la revendication 2 et l'une des revendications 9 ou 10, comprenant un axe (205) d'entraînement en rotation du volet (200), deux portions de sphère (211, 211'), opposées sur le volet sur l'axe d'entraînement (205), chaque arrête circonférentielle de butée (206A, 2006B) s'étendant entre les deux portions de sphère (211, 211').

12. Procédé de formation d'un ensemble de l'une des revendications 1 à 11, dans lequel :

   - on forme une ébauche du volet (200);
   - on monte le volet (200) mobile en rotation autour d'un axe ($X_v$) de support du volet pour pouvoir changer la position angulaire β du volet (200) sur l'axe ;
   - on entraîne en rotation une meule (800) autour d'un axe ($X_m$) de rotation de la meule (800), parallèle à l'axe ($X_v$) de support du volet et écarté de lui par une distance d' entraxe (Le);
   - on met en contact le bord du volet (200) avec la meule (800) pour le rectifier, sur une zone de rectification du volet (200);
   - on déplace la zone de rectification le long du bord du volet (200) en modifiant la position angulaire β du volet (200); et
   - on fait varier la distance d'entraxe (Le) en fonction de la position angulaire du volet (200).

13. Procédé selon la revendication 12, dans lequel on monte le volet (200) par rapport à son axe de support ($X_v$) de manière à présenter un angle d'usinage (γ) avec un plan transversal à cet axe de support ($X_v$), l'angle d'usinage (γ) étant inférieur, en valeur absolue, à la valeur de l'angle d'obturation (α) formé entre le volet (200) et un plan transversal à l'axe de la canalisation ($X_c$) dans laquelle le volet (200) est destiné à être monté.

14. Procédé selon la revendication 13, dans lequel les angles d'obturation ($\alpha$) et d'usinage ($\gamma$) sont égaux.

15. Procédé selon l'une des revendications 12 à 14, dans lequel on stoppe la variation d'entraxe (Le) pour au moins un intervalle de positions angulaires $\beta$ du volet (200).

16. Procédé selon la revendication 15, dans lequel on stoppe la variation d'entraxe (Le) pour deux intervalles de positions angulaires $\beta$ du volet (200), les deux intervalles correspondant à deux zones diamétralement opposées sur le volet (200).

17. Procédé selon l'une des revendications 12 à 16, dans lequel on indexe la variation d'entraxe (Le) en fonction d'une cartographie des dilatations du volet (200) et/ou de la canalisation (300).

18. Procédé selon l'une des revendications 12 à 16 dans lequel, la portion d'appui et d'étanchéité (211, 211') du volet (200) comportant une portion de sphère (211, 211'), la meule de rectification (800) comporte une surface concave (803), de contact avec le bord du volet (200), de forme circulaire et dont le rayon est égale au rayon de ladite sphère.

**Claims**

1. Assembly of a pipe (300) for the flow of fluid, comprising a wall, and of a flap (200) for closing off the said pipe (300), the flap (200) comprising a peripheral edge and being arranged in order to be mounted in the pipe (300) so as to rotate about an axis (Zv) between an opening position and a position for closing off the flow of fluid, the flap (200) abutting against the pipe in a closed-off position that is inclined relative to a plane transversal to an axis of the pipe, the edge of the flap (200) comprising:

   - at least one portion (206A, 2006B), called a sealing portion, making it possible to establish a seal to the fluid between the edge of the flap (200) and the wall of the pipe (300) in the closed-off position, the said sealing portion (206A, 2006B) comprising at least one circumferential ridge (206A, 2006B) of abutment on the wall of the pipe (300), and
   - at least one bearing and sealing portion (211, 211') on the wall of the pipe (300) in the open position, in the closed-off position and during the rotation of the flap (200) between these positions.

2. Assembly according to Claim 1, in which the bearing and sealing portions (211, 211', 206A, 2006B) are complementary along the edge of the flap (200).

3. Assembly according to one of Claims 1 and 2, in which the sealing portion (206A, 2006B) fulfils, in the closed-off position, a function of closing off by abutment against a corresponding portion of the pipe (300).

4. Assembly according to one of Claims 1 to 3, in which the bearing and sealing portion (206A, 2006B) is arranged in order to form a sealing line (701, 702) between the flap (200) and the pipe (300) of which the position on the pipe (300) does not vary during the rotation of the flap (200).

5. Assembly according to one of Claims 1 to 4, designed to close off a pipe (300) of circular section, in which the bearing and sealing portion (211, 211') comprises a portion of sphere (211, 211') of which the radius is equal to the radius of the section of the pipe (300).

6. Assembly according to Claim 5, in which the portion of sphere (211, 211') takes the form of a spherical cap or of a spherical annular slice (211, 211').

7. Assembly according to one of Claims 5 and 6, in which the portion of sphere (211, 211') is arranged to guide the flap (200) in rotation by mechanically forming a pivoting link with the wall of the pipe (300).

8. Assembly according to one of Claims 5 to 7, in which the circumferential ridge or ridges (206A, 2006B) of abutment on the wall of the pipe (300) take the form of a portion of ellipse of which the loci are distinct.

9. Assembly according to Claim 8, comprising two circumferential abutment ridges (206A, 2006B), the said ridges (206A, 2006B) being connected by the portion of sphere (211, 211').

10. Assembly according to Claim 9, comprising two opposite faces (A, B) extending in two distinct and parallel planes ($P_{\alpha 1}$, $P_{\alpha 2}$) in which the circumferential abutment ridges (206A, 2006B) each belong to one plane ($P_{\alpha 1}$, $P_{\alpha 2}$).

11. Assembly according to Claim 2 and one of Claims 9 and 10, comprising a axis (205) for rotating the flap (200), two opposite portions of sphere (211, 211') on the flap on the drive axis (205), each circumferential abutment ridge (206A, 2006B) extending between the two portions of sphere (211, 211').

12. Method for forming an assembly of one of Claims 1 to 11, in which:

- a blank of the flap (200) is formed;
- the flap (200) is mounted so as to be able to rotate about an axis ($X_v$) for supporting the flap in order to be able to change the angular position β of the flap (200) on the axis;
- a grinder (800) is driven in rotation about an axis ($X_m$) of rotation of the grinder (800), parallel to the axis ($X_y$) for supporting the flap and spaced apart therefrom by an interaxial distance (Le);
- the edge of the flap (200) is placed in contact with the grinder (800) in order to grind it, over a grinding zone of the flap (200);
- the grinding zone is moved along the edge of the flap (200) by modifying the angular position β of the flap (200); and
- the interaxial distance (Le) is made to vary as a function of the angular position β of the flap (200).

**13.** Method according to Claim 12, in which the flap (200) is mounted relative to its support axis ($X_v$) so as to have a machining angle (γ) with a plane transversal to this support axis ($X_v$), the machining angle (γ) being less, in absolute value, than the value of the closed-off angle (α) formed between the flap (200) and a plane transversal to the axis of the pipe ($X_c$) in which the flap (200) is designed to be mounted.

**14.** Method according to Claim 13, in which the closed-off angle (α) and machining angle (γ) angle are equal.

**15.** Method according to one of Claims 12 to 14, in which the interaxial variation (Le) is stopped for at least one range of angular positions β of the flap (200).

**16.** Method according to Claim 15, in which the interaxial variation (Le) is stopped for two ranges of angular positions β of the flap (200), the two ranges corresponding to two zones that are diametrically opposite on the flap (200).

**17.** Method according to one of Claims 12 to 16, in which the interaxial variation (Le) is indexed as a function of the cartography of the expansions of the flap (200) and/or of the pipe (300).

**18.** Method according to one of Claims 12 to 16 in which, with the bearing and sealing portion (211, 211') of the flap (200) comprising a portion of sphere (211, 211'), the grinder (800) comprises a concave surface (803), of contact with the edge of the flap (200), of circular shape and of which the radius is equal to the radius of the said sphere.

**Patentansprüche**

**1.** Fluidströmungsrohrleitungs-Anordnung (300), mit einer Wand und einer Klappe (200) für den Verschluss der Rohrleitung (300), wobei die Klappe (200) einen Umfangsrand aufweist und dafür ausgelegt ist, in der Rohrleitung (300) drehbar um eine Achse (Zv) zwischen einer Öffnungsstellung und einer Verschlussstellung für die Fluidströmung montiert zu werden, wobei die Klappe (200) an der Rohrleitung in einer Verschlussstellung, die in Bezug auf eine Ebene quer zu einer Achse der Rohrleitung geneigt ist, in Anschlag gelangt, wobei der Rand der Klappe (200) Folgendes umfasst:

- wenigstens einen Abschnitt (206A, 2006B), der Dichtungsabschnitt genannt wird und ermöglicht, eine Fluiddichtung zwischen dem Rand der Klappe (200) und der Wand der Rohrleitung (300) in der Verschlussstellung zu schaffen, wobei der Dichtungsabschnitt (206A, 2006B) wenigstens eine Umfangskante (206A, 2006B) besitzt, die einen Anschlag an der Wand der Rohrleitung (300) bildet, und
- wenigstens einen Abschnitt (211, 211') für die Abstützung und Abdichtung an der Wand der Rohrleitung (300) in der Öffnungsstellung, in der Verschlussstellung und während der Drehung der Klappe (200) zwischen diesen Stellungen.

**2.** Anordnung nach Anspruch 1, wobei die Abschnitte (211, 211', 206A, 2006B) für die Abstützung und Abdichtung längs des Randes der Klappe (200) komplementär sind.

**3.** Anordnung nach einem der Ansprüche 1 bis 2, wobei der Dichtungsabschnitt (206A, 2006B) in der Verschlussstellung eine Verschlussfunktion durch Anschlag an einer entsprechenden Wand der Rohrleitung (300) erfüllt.

**4.** Anordnung nach einem der Ansprüche 1 bis 3, wobei der Abstützungs- und Abdichtungsabschnitt (206A, 2006B) dafür ausgelegt ist, eine Abdichtungslinie (701, 702) zwischen der Klappe (200) und der Rohrleitung (300) zu bilden, deren position an der Rohrleitung (300) während der Drehung der Klappe (200) unveränderlich ist.

**5.** Anordnung nach einem der Ansprüche 1 bis 4, die dazu bestimmt ist, eine Rohrleitung (300) mit kreisförmigem Querschnitt zu verschließen, wobei der Abstützungs- und Abdichtungsabschnitt (211, 211') einen sphärischen Abschnitt (211, 211') aufweist, dessen Radius gleich dem Radius des Querschnitts der Rohrleitung (300) ist.

**6.** Anordnung nach Anspruch 5, wobei der sphärische Abschnitt (211, 211') die Form einer sphärischen Kappe oder einer sphärischen ringförmigen Scheibe (211, 211') aufweist.

7. Anordnung nach einem der Ansprüche 5 und 6, wobei der sphärische Abschnitt (211, 211') dafür ausgelegt ist, die Klappe (200) rotatorisch zu führen, indem er mechanisch eine Schwenkverbindung mit der Wand der Rohrleitung (300) herstellt.

8. Anordnung nach einem der Ansprüche 5 bis 7, wobei die eine oder die mehreren Umfangskanten (206A, 2006B) für den Anschlag an der Wand der Rohrleitung (300) die Form eines Ellipsenabschnitts aufweisen, dessen Brennpunkte voneinander verschieden sind.

9. Anordnung nach Anspruch 8, die zwei Anschlagsumfangskanten (206A, 2006B) umfasst, wobei die Kanten (206A, 2006B) durch den sphärischen Abschnitt (211, 211') verbunden sind.

10. Anordnung nach Anspruch 9, die zwei gegenüberliegende Flächen (A, B) umfasst, die sich in zwei verschiedenen und parallelen Ebenen ($P_{\alpha 1}$, $P_{,\alpha 2}$) erstrecken, wobei die Anschlagsumfangskanten (206A, 2006B) jeweils zu einer Ebene ($P_{\alpha 1}$, $P_{,\alpha 2}$) gehören.

11. Anordnung nach Anspruch 2 und einem der Ansprüche 9 oder 10, die eine Achse (205) für den rotatorischen Antrieb der Klappe (200) und zwei sphärische Abschnitte (211, 211'), die sich an der Klappe auf der Antriebsachse (205) gegenüber befinden, umfasst, wobei sich jede Anschlagsumfangskante (206A, 2006B) zwischen den zwei sphärischen Abschnitten (211, 211') erstreckt.

12. Verfahren zum Bilden einer Anordnung nach einem der Ansprüche 1 bis 11, wobei:

- ein Entwurf der Klappe (200) gebildet wird;
- die Klappe (200) rotatorisch beweglich um eine Tragachse ($X_v$) der Klappe montiert wird, um die Winkelstellung β der Klappe (200) auf der Achse zu ändern;
- eine Scheibe (800) rotatorisch um eine Drehachse ($X_m$) der Scheibe (800), die zu der Tragachse ($X_v$) der Klappe parallel und hiervon um eine Zwischenachsenstrecke (Le) beabstandet ist, angetrieben wird;
- die Kante der Klappe (200) mit der Scheibe (800) in Kontakt gebracht wird, um sie in einer Ausrichtzone der Klappe (200) auszurichten;
- die Ausrichtzone längs des Randes der Klappe (200) verlagert wird, indem die Winkelstellung β der Klappe (200) modifiziert wird; und
- die Zwischenachsenstrecke (Le) als Funktion der Winkelstellung β der Klappe (200) variiert wird.

13. Verfahren nach Anspruch 12, wobei die Klappe (200) in Bezug auf ihre Tragachse ($X_v$) in der Weise montiert wird, dass sie einen Bearbeitungswinkel (γ) mit einer Ebene, die zu dieser Tragachse ($X_v$) transversal ist, aufweist, wobei der Bearbeitungswinkel (γ) dem Betrag nach kleiner ist als der Wert des Verschlusswinkels (α), der zwischen der Klappe (200) und einer Ebene gebildet wird, die zu der Achse der Rohrleitung ($X_c$) transversal ist, in der die Klappe (200) montiert werden soll.

14. Verfahren nach Anspruch 13, wobei der Verschlusswinkel (α) und der Bearbeitungswinkel (γ) gleich sind.

15. Verfahren nach einem der Ansprüche 12 bis 14, wobei die Variation des Zwischenachsenabstands (Le) wenigstens für ein Intervall von Winkelstellungen (β) der Klappe (200) unterbrochen wird.

16. Verfahren nach Anspruch 15, wobei die Variation des Zwischenachsenabstands (Le) für zwei Intervalle von Winkelstellungen (β) der Klappe (200) unterbrochen wird, wobei die zwei Intervalle zwei diametral entgegengesetzten Zonen an der Klappe (200) entsprechen.

17. Verfahren nach einem der Ansprüche 12 bis 16, wobei die Variation des Zwischenachsenabstands (Le) als Punktion eines Kennfeldes der Dehnungen der Klappe (200) und/oder der Rohrleitung (300) indexiert wird.

18. Verfahren nach einem der Ansprüche 12 bis 16, wobei der Abstützungs- und Abdichtungsabschnitt (211, 211') der Klappe (200) einen sphärischen Abschnitt (211, 211') aufweist und die Ausrichtscheibe (800) eine konkave Oberfläche (803) für einen Kontakt mit dem Rand der Klappe (200) aufweist, die eine Kreisform hat und deren Radius gleich dem Radius der Kugel ist.

Fig. 1

Fig. 2

**Fig. 3**

**Fig. 4**

Fig. 5

Fig. 6

Fig. 7A

Fig. 7B

Fig. 7C

Fig. 7D

Fig. 8

**Fig. 9**

**Fig. 10A**

Xv                    Xm

200                        800

212        211

211'

205

803

710        810

**Fig. 10B**

Distance d'entraxe

0    70  110      180      250  290

Position angulaire du volet en degrés

**Fig. 11**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1323962 A
- EP 1106881 A
- US 5741006 A